(19) Europäisches Patentamt
European Patent Office
Office européen des brevets

(11) Publication number: **0 071 676 B1**

(12) **EUROPEAN PATENT SPECIFICATION**

(45) Date of publication of patent specification: **23.04.86**

(51) Int. Cl.⁴: **C 08 F 8/42,** C 09 D 5/16

(21) Application number: **81303583.9**

(22) Date of filing: **05.08.81**

(54) **Organotin polymers, method of making them and paints containing them.**

(43) Date of publication of application:
**16.02.83 Bulletin 83/07**

(45) Publication of the grant of the patent:
**23.04.86 Bulletin 86/17**

(84) Designated Contracting States:
**DE FR NL**

(56) References cited:
**GB-A-1 089 428**
**GB-A-2 003 162**

(73) Proprietor: **Ameron (Hong Kong) Limited**
**1401 Hutchison House 10 Harcourt Road**
**Hong Kong (HK)**

(72) Inventor: **Tooke-Kirby, David Henry**
**12, Aldergrove Walk**
**Hornchurch Essex (GB)**
Inventor: **Perry, Richard Edwin**
**110, Meadow Rise**
**Billericay Essex (GB)**
Inventor: **Arbuckle, Kenneth Harold**
**20, Oad Lodge Avenue**
**Chigwell Essex (GB)**

(74) Representative: **Boydell, John Christopher et al**
**Stevens, Hewlett & Perkins 5 Quality Court**
**Chancery Lane**
**London, WC2A 1HZ (GB)**

EP 0 071 676 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to organotin polymers such as are useful in antifouling paints.

The use of trialkyl and triaryl organotin compounds to inhibit the attachment and growth of barnacles, algae and other organisms responsible for fouling is well known. Tributyltin and triphenyltin compounds have gained particular importance as biocides in antifouling paints. The use of organotin compounds purely as additives in paint formulations has certain disadvantages, such as their high mammalian toxicity, non-durability and unpleasant odour. The advent of organotin polymers to overcome these disadvantages and their subsequent use in antifouling paints has been well known for many years. GB—A—1,089,428 and GB—A—2,003,162 describe organotin polymers and compositions containing them, albeit in concentrations too low to be very effective as antifouling paints.

Organotin groups in polymers are not significantly toxic to the organisms which it is desired to kill. The success of such paints is due to the fact that the polymers undergo a slow hydrolysis, providing a controlled release of organotin groups which is maintained over many months or years. Organotin groups have been incorporated in polymers by means of ether and ester linkages. Both have disadvantages.

For example, bis-tri-n-butyltin oxide or triphenyl tin hydroxide may be reacted with a hydroxyl-containing polymer to give a polymer containing organotin groups joined to the backbone by means of ether linkages. This type of polymer has poor antifouling properties as the organotin ether linkage is not readily hydrolysable in a marine environment, so that the release of biocide is inadequate to prevent fouling.

Alternatively, bis-tri-n-butyltin oxide or triphenyltin hydroxide may be reacted with a carboxyl-containing polymer to give a polymer containing organotin groups joined to the backbone by means of ester linkages. This process has the disadvantage that the starting carboxyl-containing polymers are not very soluble in inert solvents which are required for the reaction between carboxyl group and organotin compounds.

The present invention provides an organotin polymer, which may be prepared from a hydroxyl containing polymer, and which contains organotin groups joined to the polymer backbone by ester linkages. The polymer can be made by modification of existing commercially available polymers which are already in use, e.g. for marine paints. The resulting organotin-containing polymers are readily hydrolyzed in a marine environment, and therefore have good antifouling properties.

The invention provides an organotin polymer, derived from a hydroxyl-containing polymer having a hydroxyl value of from 50 to 400, containing pendent groups having the following general formula:—

$$—O \cdot CO \cdot R^1CO \cdot OSnR_3$$

where R is $C_1$ to $C_{10}$ alkyl, aryl, aralkyl or alkaryl, and

$R^1$ is a saturated or unsaturated aliphatic or aromatic $C_2$ to $C_{10}$ group.

These polymers may be formed by reacting a hydroxy-containing polymer with a carboxylic acid anhydride ($R^1(CO)_2O$) under conditions to open the ring and react one, but not both, of the resulting carboxyl groups with a hydroxyl group of the polymer, and then reacting the resulting carboxyl-containing polymer with an organotin compound such as an organotin oxide or hydroxide.

The hydroxyl-containing polymer has a hydroxyl value of from 50 to 400, preferably from 125 to 300. Suitable are polymers of allyl alcohol with sytrene, particularly in mole ratios from 1:1 to 1:10. The styrene gives a harder polymer, and improves the film-forming, drying and film properties of the resulting paint. In place of styrene may be used other vinyl aromatic monomers such as vinyl toluene or alphamethyl styrene or acrylic monomers such as methyl methacrylate. In place of allyl alcohol may be used a hydroxy acrylate ester such as the 2-hydroxy ethyl or 2-hydroxy propyl ester of acrylic or methacrylic acid.

The nature of the polymer is chosen to have a desired range of properties for the resulting product, e.g. a marine paint. The physical properties of the polymer can be modified by reaction with a fatty acid, such as soya oil fatty acid or tall oil fatty acid, prior to reaction with the anhydride. The fatty acid acts as an internal plasticizer. Alternatively a plasticising monomer, e.g. butyl acrylate, can be copolymerised into the backbone. The molecular weight of the polymer is chosen to give a convenient viscosity for the intended end use, e.g. in a marine paint.

As the carboxylic acid anhydride, there may be used any cyclic anhydride such as for example, maleic anhydride, succinic anhydride, phthalic anhydride, trimellitic anhydride, the reaction product of maleic anhydride with butadiene, or the reaction product of maleic anhydride with cyclopentadiene. This is reacted with the hydroxyl-containing polymer under conditions to effect ring opening of the anhydride but not to cause crosslinking of the polymer. Ordinary reaction conditions for this conventional reaction may be used, suitable temperatures being from 130°C to 155°C. The ring opening reaction may be monitored by measurement of acid value by aqueous titration.

Provided that it is capable of reacting with carboxyl groups, the nature of the organotin compound is not critical. It may for example be an oxide or hydroxide. The three organic groups attached to the (or each) tin atom may be the same or different. Tributyltin and triphenyltin compounds are most generally used. Preferred reaction temperatures are in the range 80—170°C. The reaction may conveniently be performed

under reflux in the inert organic solvent such as xylol which boils at a suitable temperature. Progress of the reaction may be monitored by collecting the evolved water.

The resulting polymer preferably contains 10 to 25% by weight, particularly 15 to 20% by weight of tin. When the proportion of tin is below 10% by weight, the antifouling properties of the polymer may not be sufficient. It is not easily possible to incorporate more than about 25% by weight of tin by means of ester linkages into an organic polymer. Under some circumstances it may be preferable to leave a proportion of hydroxyl or carboxyl groups in the polymer to improve its leaching and/or hydrolysis properties. More usually, however, equivalent amounts of the reactants are used so that one organotin group is introduced for each hydroxyl group in the starting polymer. These organotin polymers may also be useful as antifungal preservatives for timber.

The organotin polymers of this invention may in principle be formed by other methods, though the method described above is preferred:—

a) The carboxylic acid anhydride may be reacted with a hydroxyl-containing monomer, and the resulting monomer homopolymerised or copolymerised. The organotin compound is then reacted with pendent carboxyl groups in the resulting polymer.

b) The organotin compound is reacted with the carboxylic acid anhydride, and the resulting tin-containing carboxylic acid reacted with a hydroxyl-containing polymer.

The following examples illustrate the invention.

Example 1

480 g (1.6 hydroxyl equivalents) of a styrene/allyl alcohol copolymer and 50 g of toluol were placed in a two litre flask equipped with condenser, water separator, stirrer, and temperature control and heated at reflux until the polymer had dissolved. The mixture was cooled to 110°C. 156.8 g (1.6 anhydride equivalents) of maleic anhydride was then added and the temperature raised to 135—140°C. The flask contents were heated at reflux for one hour to give a final acid value of 143. 400 g of xylol was then added and the temperature cooled to below 100°C. 476.8 g (1.6 organotin equivalents) of bis tri n-butyl tin oxide was then added and the temperature raised to reflux (145—150°C) and held for two hours. Water of reaction was removed azeotropically, the final amount collected was 15 mls. The resin was then adjusted to 65% solids with xylol to give a viscosity of 2.5 Pa·s (25 poise) at 25°C. The theoretical tin content of the resin was 17.1%.

Example 2

480 g (2.2 hydroxyl equivalents) of a styrene/allyl alcohol copolymer and 50 g of toluol were placed in a two litre flask equipped with stirrer, water separator, condenser and temperature control, and heated until reflux to remove any water. The temperature was then cooled to 110°C and 156.8 g of maleic anhydride added. The temperature was then raised to 135—140°C and held for one hour to give a final acid value of 140. 400 g of xylol was added and the temperature cooled to below 100°C. 476.8 g of bis tri n-butyl tin oxide was then added and the temperature raised to reflux and held for two hours. Water of reaction was removed azeotropically, the final amount collected was 16 mls. The resin was then adjusted to 65% solids with xylol to give a viscosity of 3.0 Pa·s (30 poise) at 25°C. The theoretical tin content on solids was 17.1%.

Example 3

442 g (2.0 hydroxyl equivalents) of a styrene/allyl alcohol copolymer, 76 g (0.3 carboxyl equivalents) of tall oil fatty acid and 75 g of xylol were added to a two litre flask equipped with stirrer, water separator, condenser and temperature control. The contents were heated at 220°C for three hours until an acid value of less than 4 was obtained. The flask was then cooled to below 100°C when 50 g of toluol and 169.4 g (1.7 anhydride equivalents) of maleic anhydride was added. The temperature was then raised to 135°C and held for one hour to give an acid value of 150. The temperature was then cooled to below 100°C by addition of 400 g of xylol. 515 g (1.7 organotin equivalents) of bis tri n-butyl tin oxide was then added and the temperature raised to reflux and held for two hours. 16 mls of water were collected. The resin was finally adjusted to 65% solids with xylol to give a viscosity of 1.6 Pa·s (16 poise) at 25°C. The theoretical tin content was 17.4%.

Example 4

442 g (2.0 hydroxyl equivalents) of a styrene/allyl alcohol copolymer and 100 g of xylol were placed in a two litre flask equipped with stirrer, condenser, water separator and temperature control. The contents were heated to reflux to remove any water and dissolve the polymer. The flask was then cooled to 100°C and 262 g (1.8 anhydride equivalents) of phthalic anhydride was then added and the temperature raised to 155°C and held for one hour to give an acid value of 152. 400 g of xylol was then added and the temperature cooled to below 100°C. 527 g (1.8 organotin equivalents) of bis tri n-butyl tin oxide was then added and the temperature raised to reflux and held for two hours. 15 mls of water were collected. The resin was then adjusted to 65% solids with xylol to give a final viscosity of 0.3 Pa·s (3 poise) at 25°C. The theoretical tin content on solids was 17.3%.

Example 5

220 g (1.0 hydroxyl equivalents) of a styrene/allyl alcohol copolymer and 50 g of xylol were placed in a one litre flask equipped with stirrer, condenser, water separator and temperature control. The contents were heated to reflux removing any water (approx. 1.8 mls). The flask was then cooled to 100°C and 148 g (1.0 anhydride equivalents) of phthalic anhydride was then

added and the temperature raised to 155°C and held for two hours to give a final acid value of 161. 200 g of xylol was added and the flask cooled to below 100°C. 18.3 g (0.05 organotin equivalents) or triphenyl tin hydroxide and 283.1 g (0.95 organotin equivalents) of bis tri n-butyl oxide were then added and the temperature raised to reflux and held for two hours. 8 mls of water were collected. The resin was then adjusted to 65% solids with xylol to give a viscosity of 0.3 Pa·s (3.0 poise) at 25°C and a theoretical tin content on solids of 18.0%.

Example 6

350 parts of a copolymer of hydroxy-ethyl methacrylate, butyl acrylate and methyl methacrylate (hydroxyl value—145), at 43% solids in methyl isobutyl ketone was reacted with 37.8 parts of succinic anhydride for two hours at 120—140°C. The temperature was reduced to 80°C and 100 parts of toluol and 112.7 parts of bis tri n-butyl tin oxide added. The esterification reaction was carried out under azeotropic conditions for four hours, removing the water of reaction. The final resin was adjusted to 50% non-volatile matter with toluene to give a viscosity of 0.7 Pa·s (7 poise) at 25°C. The polymer solids contained 15% by weight of tin.

Example 7

The polymers of each Example 1 to 5 were diluted with xylene and applied to both sides of Bakelite panels to give a 50 micron dry film thickness on each side. The panels were immersed in sea water, together with an uncoated panel. After 54 days, the panels were inspected for fouling with the following results:—

| Resin of Example | Extent of fouling |
|---|---|
| 1 | Very light |
| 2 | Clean |
| 3 | Clean |
| 4 | Clean |
| 5 | Clean |
| Blank | Very heavy |

This invention also includes marine anti-fouling paints comprising film-forming resin, pigment and organic solvent, wherein the film-forming resin comprises a polymer as herein described in an amount of from 2% to 15% preferably 3% to 10%, by weight of tin.

Examples 8 to 12 show paint formulations made up using the polymers of Example 1 to 6. All the paint formulations were tested and shown to have interesting anti-fouling properties. All quantities are expressed as parts by weight.

Example 8

| | |
|---|---|
| 1:1 blend of polymers of Examples 1 and 2 | 121.8 |
| Copper thiocyanate | 44.0 |
| Titanium dioxide | 4.9 |
| Thickener | 1.5 |
| Propylene carbonate | 0.7 |
| Plasticiser | 8.0 |
| Tributyl tin oxide | 1.0 |
| Xylene | 40.0 |
| (Pigment volume concentration | 20.0%) |

Example 9

| | |
|---|---|
| Polymer of Example 3 | 119.80 |
| Zinc oxide | 198.40 |
| Thickener | 1.50 |
| Propylene carbonate | 0.70 |
| Xylene | 70.00 |
| (Pigment volume concentration | 35%) |

Example 10

| | |
|---|---|
| Polymer of Example 4 | 123.0 |
| Cuprous oxide | 40.3 |
| Micronised barytes | 274.8 |
| Propylene carbonate | 0.7 |
| Plasticiser | 8.0 |
| Xylene | 30.0 |
| (Pigment volume concentration | 50%) |

Example 11

| | |
|---|---|
| Polymer of Example 5 | 121.8 |
| Zinc oxide | 211.4 |
| Thickener | 1.5 |
| Propylene carbonate | 0.7 |
| Plasticiser | 8.0 |
| Xylene | 90.0 |
| (Pigment volume concentration | 35%) |

Example 12

| | |
|---|---|
| Polymer of Example 6 | 45.0 |
| Zinc oxide | 40.1 |
| Colloidal silica | 1.0 |
| Tributyltin fluoride | 4.1 |

**Claims**

1. An organotin polymer, derived from a hydroxyl-containing polymer having a hydroxyl value of from 50 to 400, containing pendent groups having the following general formula.

$$—O \cdot CO \cdot R^1CO \cdot OSnR_3$$

where R is $C_1$ to $C_{10}$ alkyl, aryl, aralkyl or alkaryl and $R^1$ is a saturated or unsaturated aliphatic or aromatic $C_2$ to $C_{10}$ group.

2. A polymer as claimed in claim 1, derived from a copolymer of styrene with allyl alcohol.

3. A polymer as claimed in claim 2, wherein the mole ratio of allyl alcohol to styrene in the copolymer is from 1:1 to 1:10.

4. A polymer as claimed in any one of claims 1 to 3 derived from a hydroxyl-containing polymer which has been modified by reaction with a fatty acid.

5. A polymer as claimed in any one of claims 1 to 4 and containing 10% to 25% by weight of tin.

6. A method of making the organotin polymer claimed in any one of claims 1 to 5, which method comprises reacting a hydroxyl-containing polymer with carboxylic acid anhydride ($R^1(CO)_2O$) under conditions to open the ring and react one, but not both of the resulting carboxyl groups with a hydroxyl group of the polymer, and then reacting the resulting carboxyl-containing polymer with an organotin compound.

7. A method as claimed in claim 6, wherein the carboxylic acid anhydride is maleic anhydride, succinic anhydride, phthalic anhydride, trimellitic anhydride, the reaction product of maleic anhydride with butadiene, or the reaction product of maleic anhydride with cyclopentadiene.

8. A method as claimed in claim 6 or claim 7, wherein the organotin compound is an organotin oxide or hydroxide.

9. A marine anti-fouling paint comprising film-forming resin, pigment and organic solvent, wherein the film-forming resin comprises the polymer claimed in any one of claims 1 to 5 in an amount to provide from 2% to 15% by weight of tin.

10. A marine anti-fouling paint comprising film-forming resin, pigment and organic solvent, the film-forming resin including an organotin polymer containing 10% to 25% by weight of tin in an amount to provide from 2% to 15%, by weight on the weight of the paint, of tin, characterized in that the organotin polymer contains pendent groups having the following general formula.

$$—O \cdot CO \cdot R^1CO \cdot OSnR_3$$

where R is $C_1$ to $C_{10}$ alkyl, aryl, aralkyl or alkaryl, and $R^1$ is a saturated or unsaturated aliphatic or aromatic $C_2$ to $C_{10}$ group.

**Revendications**

1. Polymère organostannique dérivé d'un polymère contenant des groupes hydroxyle possédant un indice d'hydroxyle de 50 à 400, contenant des groupes pendants répondant à la formule générale suivante:

$$—O \cdot CO \cdot R^1CO \cdot OSnR_3$$

dans laquelle R est un groupe alkyle en $C_1$ à $C_{10}$, aryle arylalkyle ou alkylaryle et $R^1$ est un groupe aliphatique saturé ou insaturé ou aromatique en $C_2$ à $C_{10}$.

2. Polymère selon la revendication 1, dérivé d'un copolymère de styrène avec un alcool allylique.

3. Polymère selon la revendication 2, dans lequel le rapport molaire de l'alcool allylique au styrène dans le copolymère est de 1:1 à 1:10.

4. Polymère selon l'une quelconque des revendications 1 à 3, dérivé d'un polymère contenant des groupes hydroxyle qui a été modifié par réaction avec un acide gras.

5. Polymère selon l'une quelconque des revendications 1 à 4 et contenant 10% à 25% en poids d'étain.

6. Procédé de fabrication d'un polymère organostannique selon l'une quelconque des revendications 1 à 5, ce procédé comprenant la réaction d'un polymère contenant des groupes hydroxyle avec un anhydride d'acide carboxylique ($R^1(CO)_2O$) dans des conditions d'ouverture du cycle et de réaction d'un, mais pas des deux, des groupes carboxyle obtenus avec un groupe hydroxyle du polymère, puis la réaction du polymère contenant des groupes carboxyle obtenu avec un composé organostannique.

7. Procédé selon la revendication 6, dans lequel l'anhydride d'acide carboxylique est l'anhydride maléique, l'anhydride succinique, l'anhydride phtalique, l'anhydride trimellitique, le produit de réaction de l'anhydride maléique avec le butadiène, ou le produit de réaction de l'anhydride maléique avec le cyclopentadiène.

8. Procédé selon la revendication 6 ou 7, dans lequel le composé organostannique est un oxyde ou un hydroxyde d'organo-étain.

9. Peinture marine antisalissure comprenant une résine filmogène, un pigment et un solvent organique, dans lequelle la résine filmogène contient le polymère selon l'une quelconque des revendications 1 à 5 en quantité permettant d'obtenir 2% à 15% en poids d'étain.

10. Peinture marine antisalissure comprenant une résine filmogène, un pigment et un solvant organique, la résine filmogène contenant un polymère organostannique contenant de 10% à 25% en poids d'étain en quantité permettant

d'obtenir de 2% à 15% en poids, par rapport au poids de la peinture, d'étain, caractérisée en ce que le polymère organostannique contient des groupes pendants répondant à la formule générale

$$—O \cdot CO \cdot R^1CO \cdot OSnR_3$$

dans laquelle R est un groupe alkyle en $C_1$ à $C_{10}$, aryle, arylalkyle ou alkylaryle et $R^1$ est un groupe aliphatique saturé ou insaturé ou aromatique en $C_2$ à $C_{10}$.

**Patentansprüche**

1. Organozinnpolymer, abgeleitet aus einem Hydroxyl enthaltenden Polymer mit einer Hydroxylzahl von 50 bis 400, enthaltend anhängende Gruppen der folgenden allgemeinen Formel

$$—O \cdot CO \cdot R^1CO \cdot OSnR_3$$

worin R $C_1$- bis $C_{10}$-Alkyl, Aryl, Aralkyl oder Alkaryl und $R^1$ eine gesättigte oder ungesättigte, aliphatische oder aromatische $C_2$- bis $C_{10}$-Gruppe bedeuten.

2. Polymer nach Anspruch 1, abgeleitet aus einem Copolymer von Styrol mit Allylalkohol.

3. Polymer nach Anspruch 2, wobei das Molverhältnis von Allylalkohol zu Styrol in dem Copolymer 1:1 bis 1:10 beträgt.

4. Polymer nach einem der Ansprüche 1 bis 3, abgeleitet aus einem Hydroxyl enthaltenden Polymer, das durch Umsetzung mit einer Fettsäure modifiziert worden ist.

5. Polymer nach einem der Ansprüche 1 bis 4, enthaltend 10 bis 25 Gew.-% Zinn.

6. Verfahren zur Herstellung des Organozinnpolymers nach einem der Ansprüche 1 bis 5, umfassend das Umsetzen eines Hydroxyl enthaltenden Polymers mit Carbonsäureanhydrid ($R^1(CO)_2O$) unter Bedingungen, um den Ring zu öffnen und eine, jedoch nicht beide der resultierenden Carboxylgruppen mit einer Hydroxylgruppe des Polymers umzusetzen, und danach Umsetzen des resultierenden Carboxyl enthaltenden Polymers mit einer Organozinnverbindung.

7. Verfahren nach Ansprüche 6, wobei das Carbonsäureanhydrid, Maleinsäureanhydrid, Bernsteinsäureanhydrid, Phthalsäurehydrid, Trimellitsäureanhydrid, des Reaktionsprodukt von Maleinsäureanhydrid mit Butadien oder das Reaktionsprodukt von Maleinsäureanhydrid mit Cyclopentadien ist.

8. Verfahren nach Anspruch 6 oder 7, wobei die Organozinnwerbindung ein Organozinnoxid oder -hydroxid ist.

9. Faulsichere Marinefarbe, umfassend ein filmbildendes Harz, ein Pigment und ein organisches Lösungsmittel, wobei das filmbildende Harz das Polymer gemäß einem der Ansprüche 1 bis 5 in einer Menge, um 2 bis 15 Gew.-% Zinn vorzusehen, umfaßt.

10. Faulsichere Marinefarbe, umfassend ein filmbildendes Harz, ein Pigment und ein organisches Lösungsmittel, wobei das filmbildende Harz ein Organozinnpolymer, enthaltend 10 bis 25 Gew.-% Zinn, in einer Menge beinhaltet, um 2 bis 15 Gew.-%, bezogen auf das Gewicht der Farbe, an Zinn vorzusehen, dadurch gekennzeichnet, daß das Organozinnpolymer anhängende Gruppen der folgenden allgemeinen Formel

$$—O \cdot CO—R^1CO \cdot OSnR_3$$

enthält, worin R $C_1$- bis $C_{10}$-Alkyl, Aryl, Aralkyl oder Alkaryl und $R^1$ eine gesättigte oder ungesättigte, aliphatische oder aromatische $C_2$- bis $C_{10}$-Gruppe bedeuten.